# EUROPEAN PATENT SPECIFICATION

(11) **EP 0 626 643 B1**
(45) Date of publication and mention of the grant of the patent: **03.05.2000**
(21) Application number: 93120299.8
(22) Date of filing: 16.12.1993
(51) Int. Cl.: G06F 11/00, H03K 17/14

(54) **Processor responsive to environmental conditions to enable or disable a delay in a processing action**
Auf Umgebungszustände reagierender Prozessor zur Befähigung oder Sperrung einer Verzögerung eines Prozessschrittes
Processeur, sensible aux conditions d'environnement pour permettre ou non un délai dans une action du processeur

(30) Priority: 24.05.1993 US 67273
(43) Date of publication of application: 30.11.1994
(73) Proprietor: Hewlett-Packard Company, Palo Alto, California 94304 (US)
(72) Inventor: Rust, Robert, Boise, Idaho 83704 (US)
(74) Representative: Schoppe, Fritz, Dipl.-Ing.

(56) References cited:
- WO-A-92/10032
- US-A- 3 996 481
- US-A- 5 123 102
- IBM TECHNICAL DISCLOSURE BULLETIN., vol.26, no.5, October 1983, NEW YORK US pages 2306 - 2308 'Digital Electronic Temperature Controller'

## Description

### FIELD OF THE INVENTION

This invention relates to a processor whose processing speed is dependent upon environmental conditions, and more particularly, to a processor that enables or disables a wait state in a processing action if an environmental condition exceeds a preestablished limit.

### BACKGROUND OF THE INVENTION

It is known that environmental conditions, i.e., temperature, power supply variations, process variables that occur during fabrication of processor components, etc., can cause substantial variations in the functioning of a processor. Designers assume "worst case" environmental conditions and often add "wait states" into a procedure to assure that all signals required for proper operation of logic circuits are present when the logic circuits are "fired". Once such a wait state is built into a procedure, it will always slow down the procedure, whether the environmental conditions are "worst case" or not.

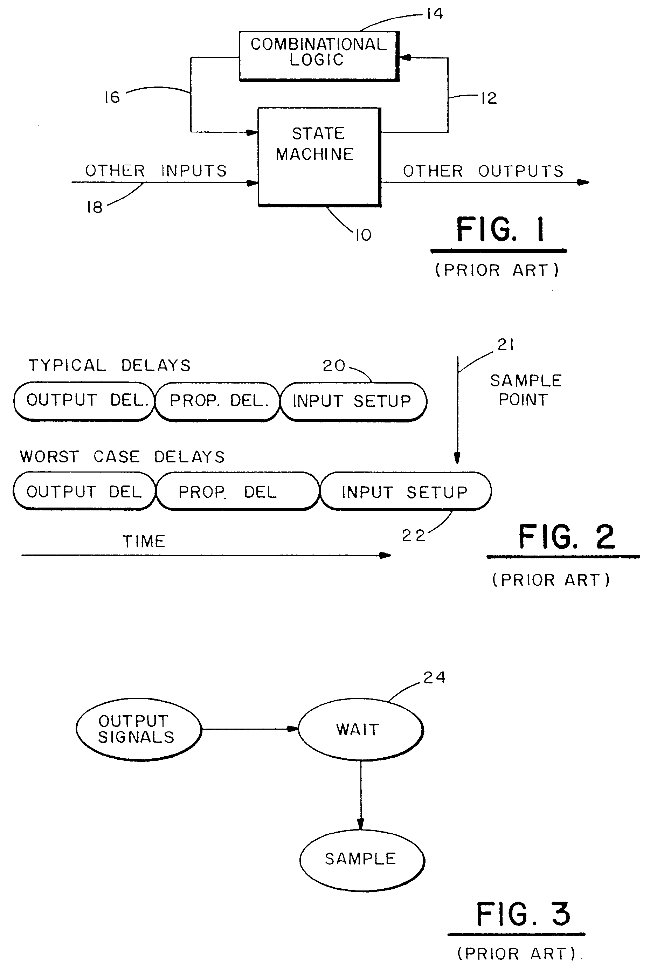

State machines often have built-in wait states. In Fig. 1, a block diagram of a state machine 10 is shown whose output 12 is connected to a combinational logic element 14. The output of combinational logic element 14 is fed via line 16 back to state machine 10. Other inputs are fed via line 18, to state machine 10. State machine 10 is designed to only provide an output on line 12 when its inputs have reached their required logical states and are stable. The time required to attain such signal stability is dependent upon, among other things, the propagation delay of signals through combinational logic element 14. Those propagation delays are variable based upon environmental conditions. In order to assure that the outputs appearing on line 16 are stable under worst case conditions, a wait state assures that internal logical circuitry only responds to input logic state conditions after a delay that considers the worst case condition.

In Fig. 2, a diagram illustrates how state machine 10 will operate in the case of both typical signal delays and worst case delays. Given a typical delay, a signal sample point can be established whenever input setup signals 20 have reached a stable state. However, since state machine 10 is designed to accommodate worst case delays, signal sample point 21 is delayed in time to assure that input signals 22 are sensed only after they have stabilized. As a result, (see state diagram of Fig. 3) a wait state 24 is programmed into state machine 10 to delay the sample time. Such a delay is then always present, even if the environmental conditions are not such as to make the delay a requirement.

WO92/10032 relates to a temperature-sensing control system. The object underlying the temperature-sensing control system disclosed in WO92/10032 is to provide security against temperature-induced damage to an integrated circuit. To achieve this object, temperature sensors are provided to detect heat generated by an integrated circuit. A microprocessor analyzes the detected temperatures and determines a temperature signal therefrom. A hold means is provided for slowing operation of the integrated circuit by a predetermined amount if the temperature signal exceeds a first predetermined value and for slowing the operation of the integrated circuit by a second predetermined amount or for stopping the operation of the integrated circuit if the temperature signal exceeds a second predetermined value. Therefore, in accordance with WO92/10032, a hold means is provided in order to provide additional time during which heat generated by the integrated circuit can be dissipated.

US-A-3996481 describes a compensating means for holding the circuit delay and the power dissipation of an integrated circuit nearly constant. A delay chain comprising several stages of inverters acts as a delay sensor to simulate the delay of the operational circuit on the chip. The delay time of the sensor is compared with a clock reference for producing a control output signal which is used to adjust the load gate voltage until the delay in the delay sensor is equal to the clock reference. Since the same load gate voltage is distributed in the rest of the operational circuits, the delay times of these circuits will track with that of the delay sensor and, thus, also tend to be held constant.

It is an object of the present invention to provide means for controlling a processor that selectively enables or disables a wait state in order to improve the performance of a processor.

This object is achieved by an apparatus in accordance with claim 1.

A processor includes logic circuitry for producing output signals in response to input signal states from other circuitry, such input signal states subject to signal delays resulting from environmental conditions. The processor includes a wait state circuit connected to the logic circuitry for delaying operation of the logic circuitry in response to the input signal states for a time period, the time period set in accordance with a worst case propagation delay of signals that give rise to the input states. A delay circuit is responsive to environmental conditions for providing a delay indication if said environmental conditions cause signal delays to be less than a predetermined value. Further circuitry is responsive to the delay indication to disable the wait state circuit so that the logic circuitry operates in a more rapid manner. In one embodiment, the delay circuit comprises a chain of circuits which feeds an edge triggered flip flop. In another embodiment, the delay circuit comprises a ring oscillator whose output is compared with a known frequency as a measure of signal propagation speed.

### DESCRIPTION OF THE DRAWINGS

Fig. 1 is a block diagram of a prior art state machine/combinational logic arrangement that aids in understanding of the problem of signal propagation delays that result from environmental factors.
Fig. 2 is a state diagram illustrating the establishment of a sample point to comply with a worst case signal propagation delay.
Fig. 3 is a state diagram illustrating the imposition of a wait state to delay the operation of a sample point.
Fig. 4 is a block diagram of circuitry that enables selective operation of a wait state in a state machine.
Fig. 5 illustrates a series of waveform diagrams helpful in understanding the operation of the circuit of Fig. 4.
Fig. 6 is a block diagram of a further embodiment of the invention.

### DETAILED DESCRIPTION OF THE INVENTION

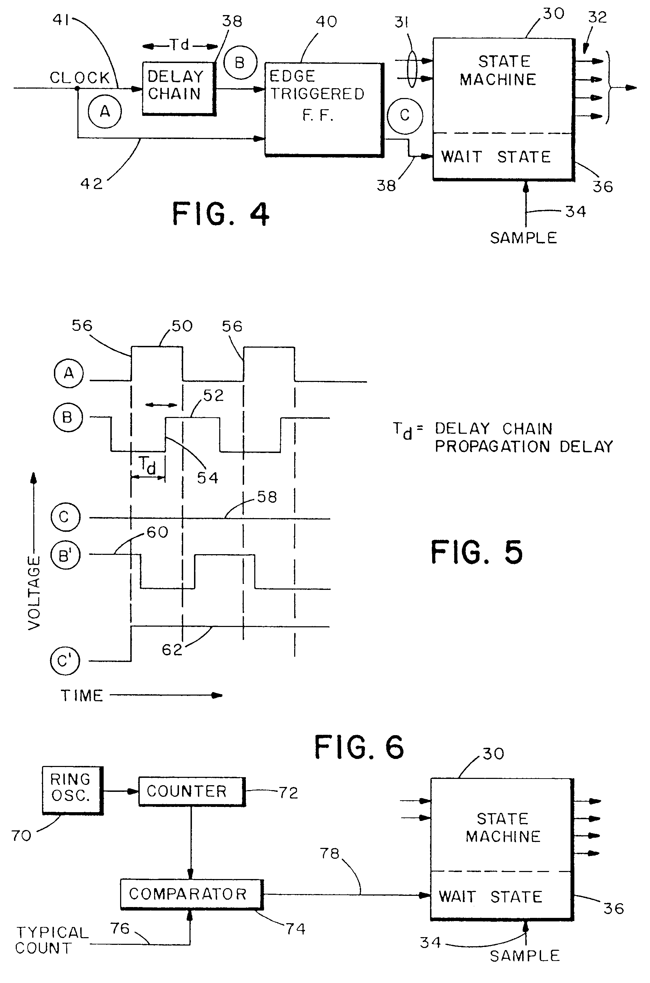

Referring to Fig. 4, a state machine 30 includes a variety of logical functions whose output states are respectively manifest on output lines 32. The logical functions respond to input states on input lines 31. The logical functions are inhibited from placing output states on output lines 32 in response to the inputs until a sample line 34 transitions to an active state. Sample line 34 is applied via a wait state 36 present in state machine 30. Wait state 36 may be either enabled or disabled in accordance with an input appearing on line 38.

Wait state 36 may be implemented by either a software process within state machine 30 or may be implemented by a gated delay circuit that either intercepts a signal appearing on sample line 34 and subjects it to a delay or enables that signal to bypass directly into state machine 30.

The operation of wait state 36 is controlled by a delay chain circuit 38 whose output is fed to an edge triggered flip-flop 40. A clock signal is fed via line 41 to delay chain circuit 38 and, via line 42, to edge triggered flip-flop 40. Delay chain circuit 38 may be a series of logical gates, inverters or other circuits that are connected in series to create a significant signal propagation delay time Td. Signal propagation delay time Td will vary in accordance with environmental conditions.

Delay time Td is set so that if the delay chain circuitry 38 exhibits a typical signal propagation delay, edge triggered flip-flop 40 is caused to disable wait state 36. If, by contrast, delay chain circuitry 38 exhibits a signal propagation delay approaching a worst case situation, edge triggered flip-flop 40 outputs a signal on line 38 to enable wait state 36. A sample signal on line 34 is thus subject to a delay, before being applied to logic circuitry within state machine 30.

The operation of the circuit of Fig. 4 will be better understood by referring to the waveform diagram of Fig. 5. Wave trace 50 illustrates the clock signal appearing on line 41 at point A. The delayed clock signal output from delay chain circuit 38 appears at point B and is illustrated by wave trace 52. Signal propagation delay time Td (within delay chain 38) is set so that trailing edge 54 of a delayed clock signal (under typical signal propagation delay conditions) appears prior to a rising edge 56 of a non-delayed clock signal. Under such a condition, when a rising edge 56 of a clock signal appears on line 42, edge triggered flip-flop 40 sees a low level at point B. As a result, flip flop 40 maintains the level low at point C on line 38 (trace 58), notwithstanding the attempted triggering action applied via line 42.

By contrast, if environmental conditions cause delay chain circuit 38 to exhibit a signal propagation delay which when added to Td approaches a worst case situation, then a further delayed clock signal (trace 60) appears at point B. Then, when rising edge 56 of a non-delayed clock signal 50 is applied to edge triggered flip-flop 40, delayed clock signal 60 causes a high level to be applied (at point B) to edge triggered flip-flop 40. As a result, the level at point C on line 38 rises (shown by trace 62) to cause activation of wait state 36.

Wait state 36 is subsequently disabled when the propagation delay through delay chain circuit 38 allows a delayed clock signal to advance in time so that, upon a rising edge of a non-delayed clock signal, a low level delayed clock pulse is present at point B. Under such a condition, flip flop 40 causes line 38 to transition to the low level and deactivates wait state 36.

Turning to Fig. 6, a further embodiment of the invention is shown that enables selective operation of wait state 36. In this case, the delay chain is implemented by a ring oscillator 70. The output of ring oscillator 70 is fed to counter 72 that provides an indication of the frequency of oscillation of ring oscillator 70, which indication is fed to a comparator 74. A further input to comparator 74 is a typical count value (via line 76). An output from comparator 74 is applied to wait state 36 via line 78.

When the count value from counter 72 exceeds typical delay count value applied via line 76, delays through the circuitry of ring oscillator (as a result of environmental factors) are less than a worst case threshold. (Ring oscillator 70 provides a known frequency output range when environmental factor-induced delays are within a "typical" range.) Under such conditions comparator 74 issues a signal that disables wait state 36. When, however, such delay exceeds the "typical" threshold, the frequency of ring oscillator 70 decreases. Thus, when the frequency of ring oscillator 70, as indicated by counter 72, decreases below typical count value 76, wait state 36 is enabled causing sample input (supplied via line 80) to be delayed accordingly.

It should be understood that the foregoing description is only illustrative of the invention. Various alternatives and modifications can be devised by those skilled in the art without departing from the invention. Accordingly, the present invention is intended to embrace all such alternatives, modifications and variances which fall within the scope of the appended claims.

## Claims

1. Apparatus including logic circuitry (30) for producing output signals in response to input signal states from other circuitry (31), said input signal states subject to signal delays through said other circuitry (31) resulting from environmental conditions, said apparatus comprising:
wait circuit means (36) connected to said logic circuitry (30) for delaying operation for a predetermined time period of said logic circuitry (30) in response to said input signal states, said predetermined time period set to enable said input signal states to achieve stable logic levels; characterized by
delay means (38) responsive to said environmental conditions for providing a typical output that indicates if said environmental conditions cause signal propagation delays to be less than a predetermined signal propagation delay value; and
logic means (40) responsive to said typical output from said delay means (38) for disabling the delaying operation of said wait circuit means (36), whereby said logic circuitry (30) operates in a less delayed manner.

2. The apparatus as recited in claim 1 wherein said predetermined signal propagation delay value is a signal delay time that is between a typical signal delay time determined at prespecified environmental conditions and a signal propagation delay time resulting from worst case environmental conditions.

3. The apparatus as recited in claim 1 wherein said delay means comprises:
a source (41) of clock signals;
a delay chain circuit (38) connected to said source of clock signals (41) for delaying said clock signals in accordance with environmental conditions, said logic means (40) connected to said delay chain circuit (38) and said source of clock signals (41) for inhibiting said typical output to indicate when said delay chain circuit (38) delays said clock signals more than a predetermined propagation delay time, whereby said wait circuit means (36) is enabled.

4. The apparatus as recited in claim 3 wherein said logic means (40) comprises an edge triggered flip-flop which responds to an edge transition of a non-delayed clock signal relative to the delayed clock signal to provide an output for disabling or enabling the delaying operation of said wait circuit means (36).

5. The apparatus as recited in claim 4 wherein said logic circuitry comprises a state machine (30) including a wait state function (36) that is responsive to the output of said edge triggered flip-flop (40), said wait state function (36) operating to delay application of an enabling signal to said logic circuitry, to which other input states are applied.

6. The apparatus as recited in claim 1 wherein said delay means comprises an oscillator (70) whose frequency is dependent upon said environment conditions.

7. The apparatus as recited in claim 6, wherein said logic means comprises:
comparator means (74) responsive to the frequency of oscillation of said oscillator (70), said comparator means (74) also provided with another input (76) manifesting a typical frequency value threshold, said comparator means (74) providing a wait state disablement output when said frequency of said oscillator (70) is greater than said typical frequency value threshold.

8. The apparatus as recited in claim 7 wherein said logic circuitry comprises a state machine (30) that includes a wait state function (36) forming said wait circuit means.

## Patentansprüche

1. Eine Vorrichtung mit einer Logikschaltungsanordnung (30) zum Erzeugen von Ausgangssignalen als Antwort auf Eingangssignalzustände von einer anderen Schaltungsanordnung (31), wobei die Eingangssignalzustände Signalverzögerungen durch die andere Schaltungsanordnung (31), die sich aus Umgebungsbedingungen ergeben, ausgesetzt sind, wobei die Vorrichtung folgende Merkmale aufweist:
eine Warteschaltungseinrichtung (36), die mit der Logikschaltungsanordnung (30) verbunden ist, zum Verzögern des Betriebs der Logikschaltungsanordnung 30 eine vorbestimmte Zeitperiode lang als Antwort auf die Eingangssignalzustände, wobei die vorbestimmte Zeitperiode eingestellt ist, um zu ermöglichen, daß die Eingangssignalzustände stabile Logikpegel erreichen; gekennzeichnet durch
eine Verzögerungseinrichtung (38), die auf die Umgebungsbedingungen anspricht, zum Liefern eines typischen Ausgangssignals, das anzeigt, ob die Umgebungsbedingungen Signalausbreitungsverzögerungen bewirken, die niedriger als ein vorbestimmter Signalausbreitungsverzögerungswert sind; und
eine Logikeinrichtung (40), die auf das typische Ausgangssignal von der Verzögerungseinrichtung (38) anspricht, zum Deaktivieren der Verzögerungsoperation der Warteschaltungseinrichtung (36), wodurch die Logikschaltungsanordnung (30) auf eine weniger verzögerte Art und Weise arbeitet.

2. Die Vorrichtung gemäß Anspruch 1, bei der der vorbestimmte Signalausbreitungsverzögerungswert eine Signalverzögerungszeitdauer ist, die sich zwischen einer typischen Signalverzögerungszeitdauer, die bei vorspezifizierten Umgebungsbedingungen bestimmt wird, und einer Signalausbreitungsverzögerungszeitdauer befindet, die sich aus den Worst-Case-Umgebungsbedingungen ergibt.

3. Die Vorrichtung gemäß Anspruch 1, bei der die Verzögerungseinrichtung folgende Merkmale aufweist:
eine Taktsignalquelle (41);
eine Verzögerungskettenschaltung (38), die mit der Taktsignalquelle (41) verbunden ist, zum Verzögern der Taktsignale gemäß den Umgebungsbedingungen, wobei die Logikeinrichtung (40) mit der Verzögerungskettenschaltung (38) und der Taktsignalquelle (41) verbunden ist, um das typische Ausgangssignal zu unterbinden, um anzuzeigen, wann die Verzögerungskettenschaltung (38) die Taktsignale mehr als eine vorbestimmte Ausbreitungsverzögerungszeitdauer verzögert, wodurch die Warteschaltungseinrichtung (36) aktiviert wird.

4. Die Vorrichtung gemäß Anspruch 3, bei der die Logikeinrichtung (40) ein Flanken-getriggertes Flip-Flop aufweist, das auf einen Flankenübergang eines nichtverzögerten Taktsignals relativ zu dem verzögerten Taktsignal anspricht, um ein Ausgangssignal zum Deaktivieren oder Aktivieren der Verzögerungsoperation der Warteschaltungseinrichtung (36) zu liefern.

5. Die Vorrichtung gemäß Anspruch 4, bei der die Logikschaltungsanordnung eine Zustandsmaschine (30) mit einer Wartezustandsfunktion (36) aufweist, die auf das Ausgangssignal des Flanken-getriggerten Flip-Flops (40) anspricht, wobei die Wartezustandsfunktion (36) wirksam ist, um ein Anlegen eines Aktivierungssignals an die Logikschaltungsanordnung zu verzögern, an die weitere Eingangszustände angelegt sind.

6. Die Vorrichtung gemäß Anspruch 1, bei der die Verzögerungseinrichtung einen Oszillator (70) aufweist, dessen Frequenz von den Umgebungsbedingungen abhängt.

7. Die Vorrichtung gemäß Anspruch 6, bei der die Logikeinrichtung folgende Merkmale aufweist:
eine Komparatoreinrichtung (74), die auf die Oszillationsfrequenz des Oszillators (70) anspricht, wobei die Komparatoreinrichtung (74) ferner mit einem weiteren Eingang (76) versehen ist, der eine typische Frequenzwertschwelle manifestiert, wobei die Komparatoreinrichtung (74) ein Wartezustand-Deaktivierungsausgangssignal liefert, wenn die Frequenz des Oszillators (70) größer als die typische Frequenzwertschwelle ist.

8. Die Vorrichtung gemäß Anspruch 7, bei der die Logikschaltungseinrichtung eine Zustandsmaschine (30) aufweist, die eine Wartezustandsfunktion (36) umfaßt, die die Warteschaltungseinrichtung bildet.

## Revendications

1. Dispositif comprenant un circuit logique (30) pour produire des signaux de sortie en réponse à des états de signal d'entrée à partir d'un autre circuit (31), lesdits états de signal d'entrée étant soumis à des retards de signal, via ledit autre circuit (31), résultant de conditions ambiantes, ledit dispositif comprenant :
- un moyen de circuit d'attente (36) connecté audit circuit logique (30) pour retarder une opération pendant une période de temps prédéterminée dudit circuit logique (30) en réponse auxdits états du signal d'entrée, ladite période de temps prédéterminée étant établie pour valider lesdits états du signal d'entrée afin d'obtenir des niveaux logiques stables ;
caractérisé par :
- un moyen de retard (38) sensible auxdites conditions ambiantes pour fournir une sortie usuelle indiquant si lesdites conditions ambiantes provoquent des retards de propagation du signal comme étant inférieurs à une valeur prédéterminée de retard de propagation du signal ; et
- un moyen logique (40) sensible à ladite sortie usuelle à partir dudit moyen de retard (38) pour invalider l'opération de retard dudit moyen de circuit d'attente, ledit circuit logique (30) fonctionnant ainsi d'une façon moins retardée.

2. Dispositif selon la revendication 1, dans lequel ladite valeur prédéterminée de retard de propagation du signal est un temps de retard du signal qui est compris entre un temps usuel de retard du signal déterminé pour des conditions ambiantes spécifiées à l'avance et un temps de retard de propagation du signal résultant des conditions ambiantes du pire des cas.

3. Dispositif selon la revendication 1, dans lequel ledit moyen de retard comprend :
- une source (41) de signaux d'horloge ; et
- un circuit de série de retard (38) connecté à ladite source de signaux d'horloge (41) pour retarder lesdits signaux d'horloge selon des conditions ambiantes, ledit moyen logique (40) étant connecté audit circuit de série de retard (38) et à ladite source de signaux d'horloge (41) pour inhiber ladite sortie usuelle afin d'indiquer l'instant où ledit circuit de série de retard (38) retarde lesdits signaux d'horloge de plus d'un temps prédéterminé de retard de propagation, ledit moyen de circuit d'attente (36) étant ainsi validé.

4. Dispositif selon la revendication 3, dans lequel ledit moyen logique (40) comprend une bascule bistable à déclenchement sur le bord réagissant à une transition de bord d'un signal d'horloge non retardé par rapport au signal d'horloge retardé afin de fournir une sortie pour invalider ou valider l'opération de retard dudit moyen de circuit d'attente (36).

5. Dispositif selon la revendication 4, dans lequel ledit circuit logique comprend une machine d'état (30) comprenant une fonction d'état d'attente (36) qui est sensible à la sortie de ladite bascule bistable à déclenchement sur le bord, ladite fonction d'état d'attente (36) étant prévue pour retarder l'application d'un signal de validation audit circuit logique, à laquelle d'autres états d'entrée sont appliqués.

6. Dispositif selon la revendication 1, dans lequel ledit moyen de retard comprend un oscillateur (70) dont la fréquence dépend desdites conditions ambiantes.

7. Dispositif selon la revendication 6, dans lequel ledit moyen logique comprend un moyen de comparateur (74) sensible à la fréquence d'oscillation dudit oscillateur (70), ledit moyen de comparateur (74) recevant, de même, une autre entrée (76) démontrant un seuil usuel de valeur de fréquence, ledit moyen de comparateur (74) fournissant une sortie d'invalidation d'état d'attente lorsque ladite fréquence dudit oscillateur (70) est supérieure audit seuil usuel de valeur de fréquence.

8. Dispositif selon la revendication 7, dans lequel ledit circuit logique comprend une machine d'état (30) comprenant une fonction d'état d'attente (36) formant ledit moyen de circuit d'attente.
